# EUROPEAN PATENT APPLICATION

(11) **EP 1 223 064 A2**
(43) Date of publication of application: **17.07.2002**
(21) Application number: 02075001.4
(22) Date of filing: 09.01.2002
(51) Int. Cl.: B60J 5/00

(54) **Impact-protection profile for automobiles**

(30) Priority: 12.01.2001 IT MI010017 U
(71) Applicant: INDUSTRIE ILPEA S.P.A., 21023 Malgesso (Varese) (IT)
(72) Inventor: Mantegazza, Claudio, 21047 Saronno (Varese) (IT)
(74) Representative: De Gregori, Antonella

(57) **Abstract**

The present invention has as its object an impact protection profile for automobiles which is made of plastoferrite, so as to be able to be applied directly at an edge of the bodywork of metal sheet of the automobile without the interposition of additional materials, such as glues, adhesive tapes and like.

## Description

The present invention refers to an impact-protection profile for automobiles.

Impact protection profiles made of rubber or a suitable plastic material with similar characteristics, which are attached on the outer parts of the bodywork of vehicles to protect it from small collisions, are known.

The most typical case is that of profiles applied to the doors in order to protect the paintwork thereof when they are, for example, opened and can bump into things. The presence of the impact-protection profile made of elastic material, protruding with respect to the plane of the door, ensures that it is that which is bumped into rather than the part with paintwork, in such a way protecting said part.

Such profiles are also generally applied to splashboards and, in some cases, to the vehicle's bumpers, still for protective purposes.

It concerns, moreover, profiles obtained by extrusion of rubber of plastic material applied to the bodywork, for example to the car door, by sticking with adhesives or adhesive/biadhesive tapes and the like.

A drawback in the use of a glue for the application of such impact-protection profiles to automobiles is, however, that the glue, for example with the passing of time under the effects of atmospheric agents and heat changes, tends to deteriorate determining the progressive disattachment of the profile from the bodywork.

In particular the problem of heat change is linked to the fact that both rubber and plastic materials with characteristics of softness are subject to a high degree of contraction. This takes place particularly in heat change conditions to which a vehicle is subjected passing from cold seasons to the summer, when for example it must remain exposed to the heat of the sun or to intense cold.

The drawback becomes worse if one thinks that, by disattaching, the profile leaves the residual glue uncovered on the bodywork, which is quite difficult to remove, and therefore creates considerable aesthetic damage. It must, moreover, be noted that the presence of glue on the bodywork or on part of it in the automobile is particularly clear in the case in which the paintwork is of a light colour.

The last but not least drawback is the one which shows up in the case where one wishes to replace the old impact protection profile with a new one. In this case, indeed, it would be necessary to completely remove the old glue, with an operation which can require the intervention of a bodywork repairman, and thus an added cost.

For the purpose of solving the problem previously outlined, the present invention proposes an impact protection profile to apply to a portion of bodywork of an automobile characterised in that it is made of plastoferrite.

As is known, plastoferrite is a magnetised material made by the extrusion of a mixture of powdered ferrite with elastomeric material. The resulting extruded profile retains the characteristics of flexibility, just like those of rubber or of soft plastic.

Plastoferrite is a magnetic material, and in such a way it can be applied and fixed directly onto the bodywork of metal sheet of the vehicle. Indeed, it is known that it is widely used as a magnetic material to insert in gaskets, for example for refrigerator doors, in order to allow the moving part to be closed onto the plate through the effect of magnetic attraction.

Plastoferrite is a material which, containing on average about 10% elastomeric material, undergoes a contraction of an absolutely lower order with respect to a rubber-based material or a thermoplastic resin-based material. In particular, the contraction of plastoferrite can be quantified at around 10⁻³, and thus becomes almost insignificant.

The use of a plastoferrite profile according to the purposes of the invention involves direct attachment to the bodywork of the automobile by magnetism, for which reason no glue of any type is required. Therefore, the plastoferrite impact protection profile according to the invention carries the double advantage on the one hand of not requiring the use of an additional material which can deteriorate, like a glue, and on the other hand of possessing practically negligible characteristics of contraction with respect to the profile made of known material, be it rubber or plastic.

In order to better understand the characteristics and advantages of the invention, we show non-limiting examples of its practical application with reference to the figures of the attached drawing.

Figure 1 shows a perspective view of some profiles according to the invention applied to edges of the door of an automobile.

Figure 2 shows an enlarged section view of a first example of an impact protection profile applied to an edge of a door.

Figure 3 shows an enlarged section view of a second example of an impact protection profile applied to an edge of a door.

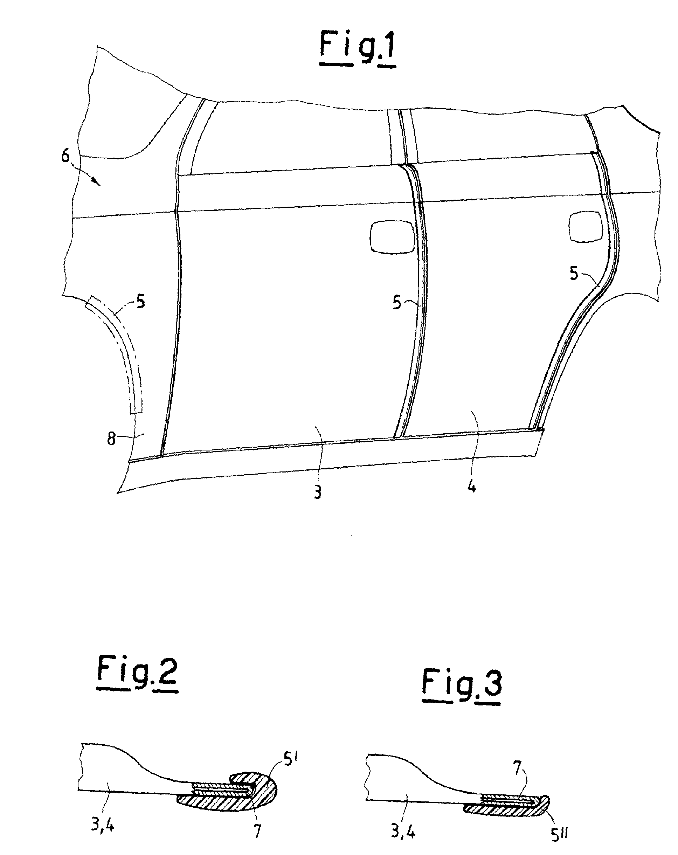

With reference to figure 1, it should be noted how on doors 3 and 4 of an automobile, partially shown in 6, impact protection profiles are shown generically indicated with 5 and realised according to the invention.

In particular, it should be noted how the profile 5 is arranged near to an edge of a panel of metal sheet 7 of a door 3 and/or 4 which must be protected from possible impacts or accidental collisions which can occur during the use of the vehicle.

It is also shown with a dotted and dashed line in figure 1 how such an impact protection profile 5 can be arranged near to a front splashboard 8.

The generic impact protection profile made of plastoferrite 5, and for example extruded, can thus be attached, where thought necessary, on the panel bodywork of the doors and/or takes up such an arrangement thanks to magnetism, without requiring any glue or like.

In figure 2 it is highlighted how on door 3 or 4 a first example of impact protection profile 5', with a U-shaped section, is arranged at the edge 7 in such a way as to have an ample covering thereof both on the outside and also partly on the inside. Such a shape, apart from guaranteeing a covering and optimal defence of the edge 7, can contribute to easing and to improving the positioning of the profile itself on the edge.

Figure 3 shows a second example, amongst the numerous possible ones, in which an impact protection profile 5" extends to cover the outer side of the door 3 or 4 and onto a small part of the edge 5 which can come into contact with an object when the door itself is opened.

In both cases, however, the edge 7 of the door 3 or 4 is well protected and the application of the impact protection profile is virtually immediate.

It is obvious that such an impact protection profile according to the present invention is particularly advantageous also if applied to small portions of edge of a panel of bodywork of the vehicle.

At the mounting stage, given the characteristics of magnetism of plastoferrite material, it will be sufficient to arrange the profiles at the parts and/or edges to be protected, without the interposition of any additional material.

It remains understood that the section of the impact protection profile according to the invention can vary quite widely according to the characteristics of the vehicle and the areas thereof to which it is applied. The essential condition is, of course, that the side of the profile which is not attached to the panel of bodywork can protrude by a minimum amount and, in any case, such as to carry out its own impact protection function.

It is not worth saying that the complete absence of glues solves all of the drawbacks previously highlighted extremely effectively.

The greater dimensional stability of plastoferrite with respect to elastomeric material could also guarantee advantages in the case of the material being painted. Indeed, it is possible to use the same colour as the automobile, in the case of painting, thus avoiding the formation of cracks in the paint itself and avoiding imperfections and cracks of any type.

## Claims

1. Impact protection profile for automobiles which can be arranged in at least one portion (3, 4, 8) of an automobile (6), **characterised in that** it is made of plastoferrite (5, 5', 5").

2. Impact protection profile according to claim 1, **characterised in that** it foresees a U-shaped section (5') which can be applied to an edge (7) of a portion of the automobile (6).

3. Impact protection profile according to claim 1, **characterised in that** it is arranged essentially to cover an outer side of said portion (3, 4, 8) of the automobile (6).

4. Impact protection profile according to any of the previous claims, **characterised in that** it is an extruded profile.
